Europäisches Patentamt

(19) European Patent Office

Office européen des brevets

(11) Numéro de publication: **0 179 722**
**B1**

(12) **FASCICULE DE BREVET EUROPEEN**

(45) Date de publication du fascicule du brevet:
09.12.87

(21) Numéro de dépôt: **85420155.5**

(22) Date de dépôt: **28.08.85**

(51) Int. Cl.⁴: **F 16 J 15/46**

(54) Joint d'étanchéité pneumatique de sécurité en élastomère à cloison intérieure.

(30) Priorité: **30.08.84 FR 8413681**

(43) Date de publication de la demande:
**30.04.86 Bulletin 86/18**

(45) Mention de la délivrance du brevet:
**09.12.87 Bulletin 87/50**

(84) Etats contractants désignés:
**DE FR GB IT SE**

(56) Documents cités:
**US - A - 3 178 779**
**US - A - 3 359 687**

(73) Titulaire: **CEFILAC, 23, rue Balzac, F-75008 Paris (FR)**

(72) Inventeur: **Rogemont, Jean, 43, rue d'Anjou, F-42400 St Chamond (FR)**

(74) Mandataire: **Séraphin, Léon et al, PECHINEY 28, rue de Bonnel, F-69433 Lyon Cedex 3 (FR)**

## Description

La présente invention concerne un joint d'étanchéité pneumatique en élastomère à sécurité améliorée, grâce à une cloison intérieure.

### Exposé du problème

Il est connu d'utiliser des joints pneumatiques rétractables, gonflables sous la pression d'un fluide, pour réaliser l'étanchéité entre deux enceintes, chambres, réservoirs, ou entre eux et l'extérieur. C'est le cas, notamment, dans les souffleries, chambres d'irradiation, véhicules amphibies, engins aériens et spatiaux, pour les portes ou bâtardeaux des piscines de désactivation de centrales nucléaires, les ateliers de retraitement de combustibles irradiés, les chambres dites «blanches» des industries électroniques et spatiales, les chambres stériles des hôpitaux.

Toutes ces installations utilisent, conjointement aux parties métalliques ou en béton, ou autre matériau de structure, un ou plusieurs joints assurant l'étanchéité avec l'extérieur, par gonflage avec de l'air ou un fluide sous pression.

De tels joints gonflables en élastomère ont été décrits dans le brevet FR-A-2 188 759 (GB-A-1 440666) au nom de CEFILAC. De façon générale, ce type de joint comporte une face d'étanchéité, qui vient en appui sur la portée à rendre étanche, un pied, qui intervient dans la fixation du joint, et deux parois latérales.

L'inconvénient majeur et bien connu de ce type de joint est que par perte de fluide moteur ou d'air, dès qu'une déchirure ou perforation de l'une des parois apparaît, le joint se trouve défaillant, il s'efface complètement par rétraction à l'interstice qu'il comblait entre le bâtardeau ou la porte et la partie à étancher et ne remplit plus sa fonction d'étanchéité. La demanderesse s'est proposé de trouver un moyen d'éviter cette défaillance.

### Etat de la technique connu

Le dispositif de sécurité, actuellement utilisé, consiste à placer à l'intérieur de la cavité du joint, une chambre à air ou une membrane imperméable contenant l'air ou le fluide moteur et suivant toutes les sollicitations du profil. Egalement, des insertions textiles, couramment utilisées dans les pneumatiques, renforcent les parois. Des déchirures ou des coupures sur la partie extérieure du joint n'entraînent pas forcément la perforation des parois ou de la membrane interne. C'est le système utilisé sur l'ensemble des pneumatiques de l'automobile, du cycle et du motocycle. Mais, lorsque la paroi du joint est fortement perforée, la chambre interne du joint l'est également puisqu'elle tapisse parfaitement l'intérieur du profilé; l'étanchéité est donc détruite, ce qui, dans la plupart des applications citées précédemment, est inacceptable, car il peut en résulter des conséquences dommageables pour la sécurité des personnes et des biens.

Le brevet US-A-3 359 687 décrit par ailleurs un joint gonflable expansible pour système de pressurisation aéronautique, comprenant deux compartiments étanches à parois ondulées gonflables individuellement et séparés par une paroi. La hauteur du joint en service est obtenue par le gonflage à plus forte pression d'un seul compartiment, l'autre compartiment moins gonflé restant rétracté. En cas de crevaison du compartiment expansé, la pression de l'autre compartiment provoque son expansion, ce qui permet de maintenir la hauteur du joint. Dans ce fonctionnement, la cloison séparant les deux compartiments expansibles individuellement joue un rôle de séparation étanche inerte.

### Exposé de l'invention

L'invention se propose de résoudre le problème de la sécurité d'un joint gonflable en élastomère d'une façon différente de celle décrite par le brevet US-A-3 359 687, façon dans laquelle la cloison de séparation du joint en deux chambres intervient elle-même pour le maintien de l'étanchéité en cas de percement.

De façon plus précise, le joint d'étanchéité pneumatique de sécurité en élastomère de l'invention comporte comme il est connu: une paroi d'étanchéité externe, un pied et deux parois latérales, qui définissent un volume interne de largeur interne maximale (l) comprise entre les deux parois latérales et de hauteur interne maximale (H) comprise entre la paroi d'étanchéité et le pied, et en outre une cloison intérieure étanche qui sépare le volume interne en deux chambres possédant chacune un moyen de mise en pression. Selon l'invention, la cloison intérieure étanche se raccorde aux parois latérales de sorte que les volumes respectifs des deux chambres qu'elle sépare soient dans un rapport compris entre 0,9 et 1,1, et de plus:

— si l/H est compris entre 1 et 2, le joint ayant typiquement une cavité interne de forme en section droite circulaire ou rectangulaire, la largeur développée (L) de cette cloison étanche au repos est comprise entre 1,1 fois et 1,4 fois la largeur interne (l) ;

— si l/H est compris entre 2 et 8, le joint ayant typiquement une cavité interne de forme en section droite ovale ou rectangulaire beaucoup plus large que haute, la largeur développée (L) de cette cloison étanche au repos, c'est-à-dire dans l'état non gonflé, est au moins égale à la largeur interne (l) tout en étant inférieure ou égale à 1,2 fois cette largeur interne, ce qui s'exprime plus simplement par:

$$1 \leqslant L \leqslant 1,2\ l$$

En cas de percement de l'une quelconque des deux chambres, la cloison intérieure étanche de l'invention se déforme sous l'effet de la pression de l'autre chambre et vient s'appuyer sur la paroi d'étanchéité externe ou la paroi de pied de la chambre percée de telle sorte que l'étanchéité que le joint assure est préservée.

Le plus souvent, les deux chambres du joint de l'invention sont gonflées à des pressions égales et ont des épaisseurs de paroi comparables, de sorte que le rapport de leurs volumes respectifs reste sensiblement constant lorsqu'on passe de l'état rétracté ou de repos à l'état gonflé. Pour la sécurité du joint, dans laquelle la cloison intérieure étanche joue un rôle semblable vis-à-vis des deux chambres, il est alors préféré que les deux chambres aient des volumes sensiblement égaux avec des volumes respectifs dans un rapport compris entre 0,95 et 1,05.

Conformément à l'invention, il faut que la largeur développée de la cloison intérieure étanche du joint, après déformation sous l'effet de la pression différentielle résultant du percement d'une chambre, soit suffisante pour que cette cloison vienne au contact et en appui sur la paroi de la chambre percée. La situation de la largeur développée de la cloison intérieure par rapport aux dimensions du volume intérieur, et en particulier par rapport à la largeur interne, se modifie entre l'état non gonflé et l'état gonflé lorsque le joint est plus large que haut, car alors le joint tend à s'arrondir au gonflage et de ce fait la cloison ondule si elle était plane à l'état non gonflé ou ondule davantage si elle était déjà ondulée. C'est à partir de cette situation à l'état gonflé que la déformation supplémentaire due à la pression différentielle en cas de percement doit premettre le maintien de l'étanchéité comme il vient d'être décrit. Au repos, le rapport de la largeur développée de la cloison intérieure à la largeur interne doit aussi de préférence être plus important lorsque le joint tendra moins à se déformer pour s'arrondir au gonflage, c'est-à-dire lorsque son rapport «l/H» diminuera en se rapprochant de 1.

L'épaisseur de la cloison intérieure de l'invention doit en outre de préférence être suffisamment faible pour rendre son extension et ses déformations faciles, mais pas trop faible vis-à-vis des risques de percement ultérieurs. L'épaisseur des parois latérales, ou leur épaisseur la plus faible lorsque celles-ci présentent des variations, est prise comme point de repère, et il est préférable que l'épaisseur de la cloison intérieure au repos soit comprise entre 0,6 fois et 1 fois cette épaisseur de paroi latérale, et de façon optimale qu'elle soit comprise entre 0,7 fois et 0,9 fois cette épaisseur, de façon à permettre une bonne déformation préférentielle de la cloison intérieure étanche en cas de percement.

Avec l'une ou l'autre de ces deux conditions d'épaisseur, deux cas sur lesquels portent les exemples qui suivent sont particulièrement intéressants en pratique:
— si «l/H» est compris entre 1 et 1,5, la cloison intérieure étanche se raccorde de préférence aux deux parois latérales sensiblement à la même hauteur et elle a une largeur développée au repos comprise entre 1,2 fois et 1,4 fois la largeur interne (l);
— si «l/H» est compris entre 3 et 5, la cloison intérieure étanche a une largeur développée au repos (L) égale à la largeur interne (l) et elle se raccorde à chacune des parois latérales selon un angle de 80 à 100° et sensiblement à la même hauteur de ces parois latérales.

*Exemples*

La figure 1 représente un premier exemple de joint selon l'invention, de section de forme sensiblement rectangulaire, à l'état non gonflé, en section droite.

La figure 2 représente le même joint à l'état gonflé, en section droite.

La figure 3 représente le même joint après percement de sa voûte d'étanchéité, en section droite.

La figure 4 représente le même joint après percement du pied, en section droite.

La figure 5 représente un deuxième exemple de joint selon l'invention, de section de forme sensiblement ovale, à l'état non gonflé, en section droite.

La figure 6 représente ce deuxième joint à l'état gonflé, en section droite.

La figure 7 représente ce deuxième joint après percement de sa voûte d'étanchéité, en section droite.

La figure 8 représente ce même joint, après percement de la partie inférieure de sa paroi latérale, en section droite.

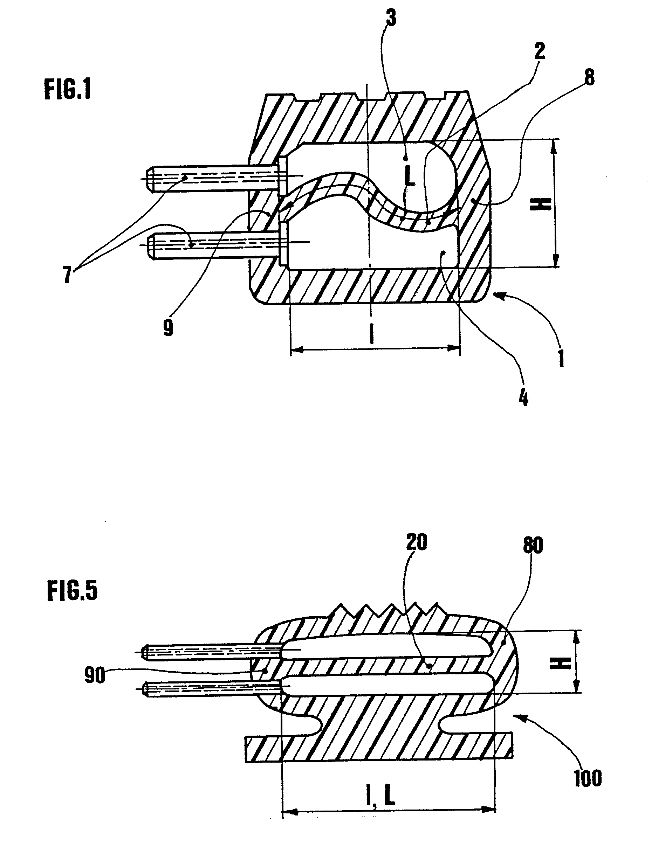

Le joint du premier exemple (1) a à l'état gonflé (figure 1) une largeur interne maximale (l) de 28 mm et une hauteur interne maximale (H) de 24 mm. Il comporte une cloison intérieure étanche (2) de largeur développée (L) égale à 36 mm, soit 1,28 fois la largeur interne (l), qui sépare le volume interne du joint en deux chambres, supérieure (3) et inférieure (4), de volumes sensiblement égaux. Cette cloison (2) ondulée épaisse de 3 mm se raccorde, à ses deux extrémités, aux faces internes des parois latérales (8) (9) du joint épaisses de 3,5 mm, à la même hauteur de ces faces internes. Chaque chambre (3) (4) est munie d'au moins un raccord de valve (7) qui la relie à une source de fluide sous pression, de façon que les deux chambres soient soumises à une même pression. Ces raccords sont placés latéralement (comme représenté) ou au dos du joint dans le cas d'un joint fermé sur lui-même, souvent un joint circulaire, et ils sont placés en bout de joint et fixés aux plaques ou bouchons d'élastomère qui les obturent à leurs extrémités lorsqu'il s'agit de joints linéaires.

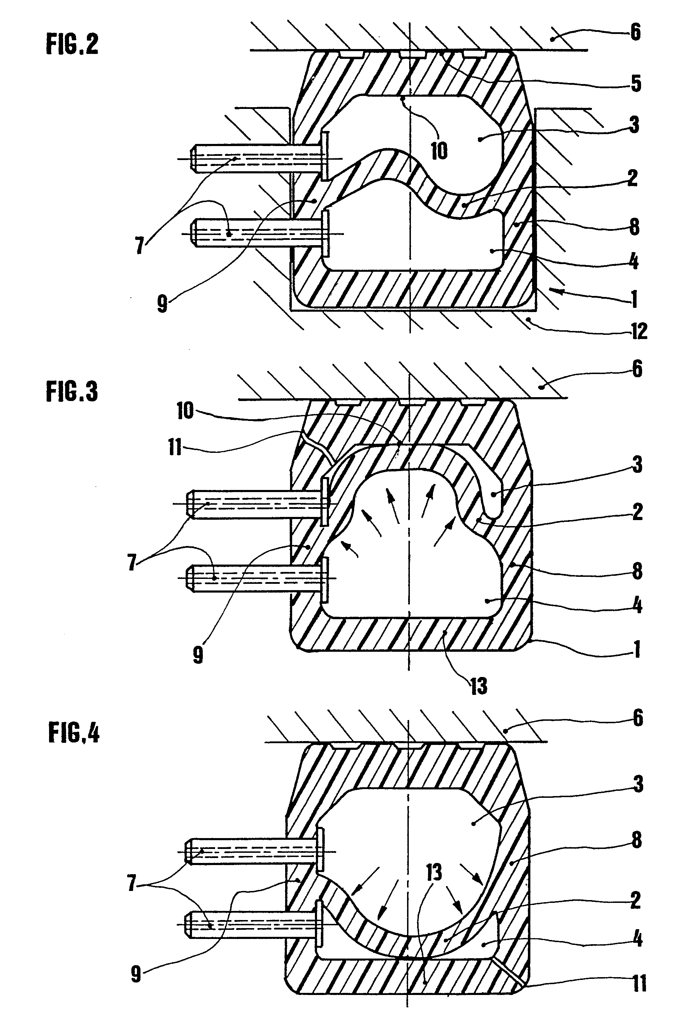

Lorsque le joint (1) est gonflé (figure 2) à une même pression de 1,3 bar pour les deux chambres, la hauteur interne du joint augmente pour devenir voisine de sa largeur interne, tandis que cette largeur interne et la largeur développée de la cloison intérieure (2) restent sensiblement constantes. La cloison intérieure (2) ondulée a une position d'équilibre instable entre les chambres (3) et (4), elle peut occuper n'importe quelle position à l'intérieur du joint (1) sans contrainte notable.

Dans le cas particulier représenté sur la figure 2, le joint est disposé dans une gorge (12), taillée, par exemple, dans la paroi fixe d'une enceinte étanche (1), la face d'étanchéité (5) venant en appui sur la portée plane (6) qui est, par exemple, la porte ou l'élément mobile de l'enceinte étanche. La disposition inverse est également possible, c'est-à-dire, que la gorge peut être taillée dans l'élément mobile.

Lorsqu'une des parties du joint, par exemple la voûte d'étanchéité (10) se trouve perforée ou déchirée (11) (cas de la figure 3) la chambre (3) perd sa pression et la cloison (2) se trouve soumise à une différence de pression par rapport à l'autre chambre (4) restée intacte. La cloison (2) se déforme donc sous l'effet de la pression de la chambre (4) et vient au contact de la voûte (10) de la chambre (3) qui se trouve alors à la pression atmosphérique, ou, tout au moins, à une pression inférieure à celle de la chambre (4). L'étanchéité est donc préservée. On peut, le cas échéant, sur détection de la perforation (11), augmenter la pression de la chambre intacte (4).

La figure 4 montre la situation inverse où la perforation (11) a affecté la chambre inférieure (4) ; la cloison (2) vient alors en appui sur la paroi interne du pied (13) de la chambre (4) qui est retombée à la pression atmosphérique ; l'étanchéité sur la portée (6) est, de la même façon, préservée. Dans cette situation comme dans la précédente, la bonne mise en appui de la cloison (2) est liée à la fois à son ondulation ou supplément de largeur développée initial et à l'allongement supplémentaire dû à la pression de la chambre non percée, et elle est facilitée par l'épaisseur de la cloison (2) un peu plus faible que celle des parois latérales (7) (8).

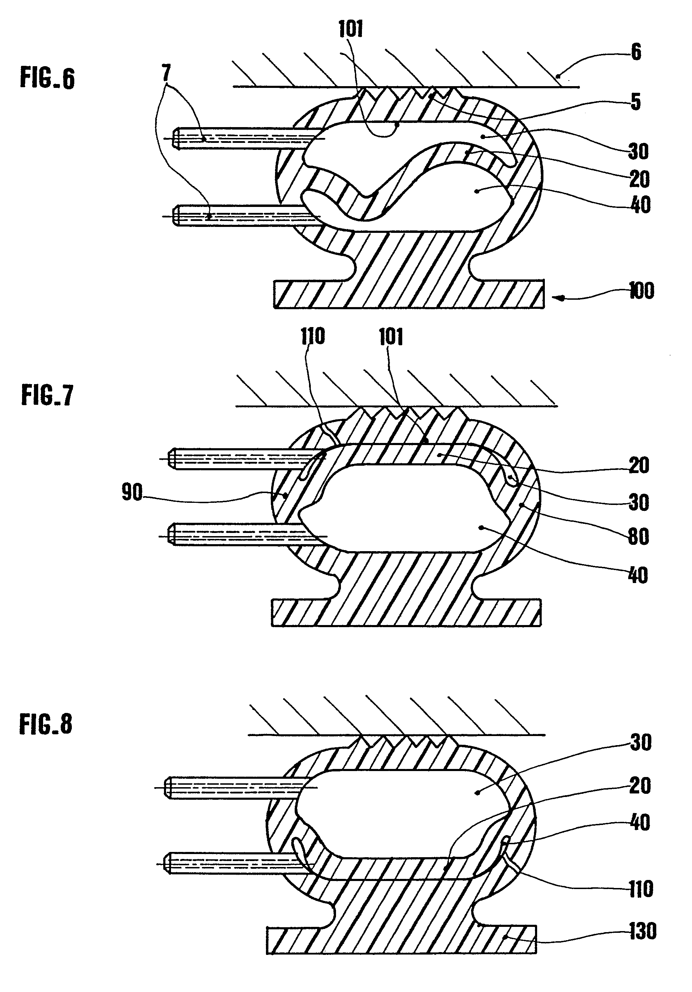

Le joint du deuxième exemple (100) est de type ovale et a à l'état non gonflé (figure 5) une largeur interne maximale (I) de 107 mm et une hauteur interne maximale (H) de 25 mm, soit un rapport I/H de 4,1, avec une épaisseur de paroi de 10 mm. Il comporte une cloison intérieure étanche (20), de largeur développée au repos 107 mm, largeur égale à la largeur interne (I), et d'épaisseur 7,5 mm. Cette cloison intérieure (20) se raccorde aux faces internes des parois latérales (80) (90) de façon perpendiculaire et sensiblement à mi-hauteur de ces parois latérales, la hauteur de ces parois pouvant alors être appréciée «arrondis de raccordement compris» et elle sépare le volume interne en deux chambres (30) et (40) ayant sensiblement le même volume.

Le joint (100) gonflé (figure 6) a diminué de largeur et augmenté de hauteur, et sa cloison étanche (20) est maintenant ondulée. L'ondulation préalable de cette cloison, qui prépare sa mise en appui en cas de percement de l'une des deux chambres (30) ou (40), est ainsi obtenue par la déformation propre à cette forme de joint (I/H voisin de 4) lors de son gonflage. Comme dans le premier exemple, les deux chambres sont gonflées à même pression et la cloison étanche (20) a une position d'équilibre instable entre ces deux chambres. Les figures 7 et 8 représentent les mêmes situations de percement que les figures 3 et 4 : lorsque la chambre supérieure (30) est percée par une perforation (110) (figure 7), la cloison intérieure (20) vient en contact avec la voûte (101) et soutient cette voûte (101), tandis que, lorsque la chambre inférieure (40) est percée par une perforation (110), la cloison (20) vient s'appuyer sur la paroi interne du pied (130).

Ce deuxième type de joint est prévu pour être monté par son pied (130) dans une rainure, du genre «queue d'aronde» par exemple, tandis que d'autres formes de joints selon l'invention, prévus pour des pressions de service relativement basses, ne nécessitent ni gorge, ni rainure pour leur mise en place.

*Exemple d'application*

On a réalisé par extrusion une série de joints, de deux mètres de long, en polymère «SBR» (styrène-butadiène-rubber), conformes au dernier exemple, et ayant donc au repos une section schématisée par la figure 5, et à l'état gonflé une section schématisée par la figure 6. Au repos, à l'état rétracté, les joints ont une largeur de 130 mm et une hauteur de 75 millimètres. En vue de tester le comportement de la cloison interne, et sa réponse à la perte de pression de l'une ou l'autre chambre, on a relié les joints à tester par les raccords (7) à un système pneumatique asservi de façon à réaliser des cycles successifs de :

— mise en équipression des deux chambres sous 2 bars,

— dégonflage d'une chambre — ce qui provoque la chute de la pression de 2 à environ 1 bar dans la chambre restée en pression — dont le volume se trouve peu à peu doublé,

— remise à la pression de 2 bars de la chambre restée en pression,

— regonflage à 2 bars de la chambre dégonflée, et dégonflage de la chambre qui se trouvait en pression,

et ainsi de suite.

On a noté que, lorsque les deux chambres sont en pression, la hauteur du joint est de 130 mm (au lieu de 74 mm sous pression à l'état dit «rétracté»). Lorsqu'une chambre est dégonflée et l'autre à une pression de 2 bars, la hauteur est encore de 120 mm, ce qui est très largement suffisant pour assurer, par exemple, l'étanchéité des glissières de bâtardeaux dans les piscines de réacteurs, où le jeu normal peut être, par exemple, de l'ordre de 100 mm.

Après 15 000 cycles alternés, aucune altération de l'étanchéité du joint et de la cloison n'est apparue, la hauteur du joint gonflé, avec une chambre dégonflée, restant égale à 120 millimètres, et la hauteur, à l'état rétracté, égale à 75 mm.

En outre, ce type de joint peut résister à une pression interne au moins égale à 3 fois sa pression de service dans l'une ou l'autre chambre ou dans les deux, du fait de la présence de la cloison médiane limitant les efforts sur les parois latérales.

La mise en œuvre du joint à cloison interne, objet de l'invention, améliore notablement la sécurité des dispositifs d'étanchéité, notamment dans les domaines nucléaire, aérospatial, électronique et médical.

## Revendications

1. Joint d'étanchéité pneumatique de sécurité en élastomère comportant une paroi d'étanchéité externe, un pied et deux parois latérales (8, 9), définissant un volume interne de largeur interne maximale (I) comprise entre les deux parois latérales (8, 9) et de hauteur interne maximale (H) comprise entre la paroi d'étanchéité externe et le pied, ledit joint comportant en outre une cloison (2) intérieure étanche qui sépare le volume interne en deux chambres (3, 4) possédant chacune un moyen (7) de mise en pression, caractérisé en ce que sa cloison intérieure étanche (2) se raccorde aux parois latérales (8, 9) de sorte que les volumes respectifs des deux chambres (3, 4) qu'elle sépare soient dans un rapport compris entre 0,9 et 1,1, et en ce que:

— si l/H est compris entre 1 et 2, la largeur développée (L) de cette cloison étanche (2) au repos est comprise entre 1,1 fois et 1,4 fois la largeur interne (I);

— si l/H est compris entre 2 et 8, la largeur développée (L) est telle que:

$$1 \leqslant L \leqslant 1,2 \, I.$$

2. Joint d'étanchéité selon la revendication 1, caractérisé en ce que sa cloison intérieure étanche (2) a une épaisseur comprise entre 0,6 fois et 1 fois l'épaisseur de la paroi latérale la plus faible.

3. Joint d'étanchéité selon la revendication 2, caractérisé en ce que sa cloison intérieure étanche (2) a une épaisseur comprise entre 0,7 fois et 0,9 fois l'épaisseur de paroi latérale la plus faible.

4. Joint d'étanchéité selon l'une des revendications 2 ou 3, dans le cas où l/H est compris entre 1 et 1,5, caractérisé en ce que sa cloison intérieure étanche (2) se raccorde aux deux parois latérales (8, 9) sensiblement à la même hauteur et en ce qu'elle a une largeur développée au repos (L) comprise entre 1,2 fois et 1,4 fois la largeur interne (I).

5. Joint d'étanchéité selon l'une des revendications 2 ou 3, dans le cas où l/H est compris entre 3 et 5, caractérisé en ce que sa cloison intérieure étanche (2) a une largeur développée au repos (L) égale à la largeur interne (I) et en ce qu'elle se raccorde à chacune des parois latérales (8) (9) selon un angle de 80 à 100° et sensiblement à même hauteur de ces parois latérales (8) (9).

6. Joint d'étanchéité selon l'une des revendications 1 à 5, caractérisé en ce que chaque chambre (3) possède un moyen de détection d'une perforation (11) et un moyen pour augmenter la pression dans la chambre non perforée (4).

## Patentansprüche

1. Pneumatische Sicherheitsdichtung aus einem Elastomer mit einer äusseren Dichtungswandung, einem Sockel und zwei Seitenwandungen (8, 9), die ein Innenvolumen eingrenzen, das eine maximale innere Breite (1) zwischen den beiden Seitenwandungen (8, 9) und eine maximale innere Höhe (H) zwischen der äusseren Dichtungswandung und dem Sockel aufweist, wobei die Dichtung ausserdem ein Innenschott (2) aufweist, das dicht ist und das Innenvolumen in zwei Kammern (3, 4) unterteilt, die jeweils ein Druckerzeugungsorgan (7) aufweisen, dadurch gekennzeichnet, dass das dichte Innenschott (2) derart an den Seitenwandungen (8, 9) angeordnet ist, dass die jeweiligen Volumina der zwei Kammern (3, 4), die das Innenschott trennt, in einem Verhältnis von 0,9 bis 1,1 zueinander stehen und dadurch, dass:

— wenn das Verhältnis l: H zwischen 1 und 2 liegt, die sich entwickelnde Breite (L) dieses dichten Innenschottes (2) im Ruhezustand zwischen dem 1,1 und 1,4 fachen der Innenbreite (I) beträgt, und

— wenn l: H zwischen 2 und 8 liegt, die entwickelte Breite (L) folgende Relation erfüllt:

$$1 \leqslant L \leqslant 1,2 \, I.$$

2. Dichtung nach Anspruch 1, dadurch gekennzeichnet, dass das dichte Innenschott (2) eine Dicke hat, die zwischen dem 0,6 und dem 1 fachen der Dicke der dünnsten Seitenwandung liegt.

3. Dichtung nach Anspruch 2, dadurch gekennzeichnet, dass das dichte Innenschott (2) eine Dicke hat, die zwischen dem 0,7 fachen und dem 0,9 fachen der Dicke der dünnsten Seitenwandung liegt.

4. Dichtung nach einem der Ansprüche 2 oder 3, wobei l: H zwischen 1 und 1,5 liegt, dadurch gekennzeichnet, dass das dichte Innenschott (2) sich ungefähr derselben Höhe an den beiden Seitenwandungen (8, 9) anschliesst, und dadurch, dass es im Ruhezustand eine entwickelte Breite (L) hat, die zwischen dem 1,2 und 1,4 fachen der inneren Breite (I) liegt.

5. Dichtung nach einem der Ansprüche 2 oder 3, wobei l: H zwischen 3 und 5 liegt, dadurch gekennzeichnet, dass das dichte Innenschott (2) im Ruhezustand eine entwickelte Breite (L) hat, die der Innenbreite (1) entspricht und dadurch, dass es sich an jede der Seitenwandungen (8, 9) mit einem Winkel zwischen 80 und 100° und etwa jeweils auf derselben Höhe dieser Seitenwandungen (8, 9) anschliesst.

6. Dichtung nach einem der Ansprüche 1 bis 5, dadurch gekennzeichnet, dass jede Kammer (3) ein Organ zum Erfassen einer Perforierung (11) und ein Organ zum Erhöhen des Druckes in der nichtperforierten Kammer (4) aufweist.

## Claims

1. A safety pneumatic sealing joint of elastomer comprising an external sealing wall, a base portion and two side walls (8, 9) defining an internal volume of maximum internal width (1) between the two side walls (8, 9) and of maximum internal height (H) between the external sealing wall and the base portion said joint further comprising an internal sealing partition (2) separating the internal volume into two chambers (3, 4) which each have a pressurising means (7), characterised in that its sealing internal partition (2) is connected to the side walls (8, 9) so that the respective volumes of the two chambers (3, 4) that it separates are in a ratio of between 0.9 and 1.1 and that:

— if l/H is between 1 and 2, the developed width (L) of said partition (2) in the rest condition is between 1.1 and 1.4 times the internal width (I);

— if l/H is between 2 and 8, the developed width (L) is such that:

$$1 \leqslant L \leqslant 1.2\,l.$$

2. A sealing joint according to claim 1, characterised in that its sealing internal partition (2) is of a thickness of between 0.6 and 1 times the thickness of the thinnest side wall.

3. A sealing joint according to claim 2, characterised in that its sealing internal partition (2) is of a thickness of between 0.7 and 0.9 times the thickness of the thinnest side wall.

4. A sealing joint according to either one of claims 2 or 3 when l/H is between 1 and 1.5, characterised in that its internal partition (2) connected to the two side walls (8, 9) substantially at the same height and that it is of a developed width (L) in the rest condition which is between 1.2 and 1.4 times the internal width (l).

5. A sealing joint according to either one of claims 2 or 3 when l/H is between 3 and 5, characterised in that its internal partition (2) is of a developed width (L) in the rest condition equal to the internal width (l) and that it is connected to each of the side walls (8, 9) at an angle of 80 to 100° and substantially at the same height of said side walls (8, 9).

6. A sealing joint according to any one of claims 1 to 5, characterised in that each chamber (3) has a means for detecting a perforation (11) and a means for increasing the pressure in the non-perforated chamber (4).

**FIG.1**

**FIG.5**

**FIG.2**

**FIG.3**

**FIG,4**

**FIG.6**

**FIG.7**

**FIG.8**